# EUROPÄISCHE PATENTSCHRIFT

(11) **EP 2 519 471 B1**
(45) Veröffentlichungstag und Bekanntmachung des Hinweises auf die Patenterteilung: **17.08.2016**
(21) Anmeldenummer: 10805687.0
(22) Anmeldetag: 15.12.2010
(51) Int. Cl.: C01G 1/02, C01G 23/04, C01G 25/02

(54) **SYNTHESE VON NANOPARTIKELN MITTELS IONISCHER FLÜSSIGKEITEN**
SYNTHESIS OF NANOPARTICLES BY MEANS OF IONIC LIQUIDS
SYNTHÈSE DE NANOPARTICULES AU MOYEN DE LIQUIDES IONIQUES

(30) Priorität: 29.12.2009 DE 102009060835
(43) Veröffentlichungstag der Anmeldung: 07.11.2012
(73) Patentinhaber: Leibniz-Institut für Neue Materialien gemeinnützige GmbH, 66123 Saarbrücken (DE)
(72) Erfinder: OLIVEIRA, Peter William de, 66123 Saarbrücken (DE); LIN, Hechun, 66125 Saarbrücken (DE); VEITH, Michael, 66386 St.-Ingbert (DE)
(74) Vertreter: Patentanwälte Gierlich & Pischitzis Partnerschaft mbB
(86) Internationale Anmeldenummer: PCT/EP2010/007634
(87) Internationale Veröffentlichungsnummer: WO 2011/079908

(56) Entgegenhaltungen:
- WO-A1-2009/079713
- CN-A- 101 475 222
- HU S ET AL: "Synthesis of mesostructure anatase TiO2 particles in room-temperature ionic liquids", MATERIALS LETTERS, NORTH HOLLAND PUBLISHING COMPANY. AMSTERDAM, NL, Bd. 62, Nr. 17-18, 30. Juni 2008 (2008-06-30), Seiten 2954-2956, XP022648744, ISSN: 0167-577X, DOI: DOI:10.1016/J.MATLET.2008.01.082 [gefunden am 2008-02-05]

## Beschreibung

### Gebiet der Erfindung

Die Erfindung betrifft ein Verfahren zur Herstellung von nanoskaligen Partikeln.

### Stand der Technik

Im Stand der Technik sind viele Methoden bekannt, Nanopartikel in Sol-Gel-Verfahren herzustellen (DE 10 2004 009 287 A1). Mit diesen Verfahren können Nanopartikel in guter Qualität erhalten werden. Allerdings sind diese Verfahren oft mehrstufig und erfordern z.B. die Zugabe von Katalysatoren, welche zu Verunreinigungen im Produkt führen.

Die Verfahren, welche ionische Flüssigkeiten verwenden, erlauben meistens keine Regeneration oder mehrfache Verwendung der ionischen Flüssigkeiten.
WO 2009/079713 A1 offenbart die Herstellung eines Katalysators mit Rutheniumoxid-Nanopartikeln in einer Matrix unter Verwendung von ionischen Flüssigkeiten.
Aufgabe

Aufgabe der Erfindung ist es, ein Verfahren anzugeben, welches in nur wenigen Schritten erlaubt, nanoskalige Partikel herzustellen. Die verwendeten ionischen Flüssigkeiten sollten mehrfach verwendet werden können. In Anbetracht des hohen Preises der ionischen Flüssigkeiten sollte das Verfahren mit möglichst wenig ionischer Flüssigkeit auskommen.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Die Erfindung betrifft ein Verfahren zur Herstellung nanoskaliger Partikel.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

In einem ersten Schritt wird eine Zusammensetzung aus einer hydrolysierbaren Metallverbindung, mindestens einer ionischen Flüssigkeit und einer Verbindung mit mindestens einer Hydroxylgruppe hergestellt.

In einer weiteren Ausführungsform der Erfindung handelt es sich bei der hydrolysierbaren Metallverbindung um mindestens eine Verbindung der allgemeinen Formel (I)

MXₙ,

wobei M ein Metall und X eine hydrolysierbare Gruppe ist, die gleich oder verschieden sein kann, wobei zwei Gruppen X durch eine zweizähnige hyrolysierbare Gruppe oder eine Oxogruppe ersetzt sein können oder drei Gruppen X durch eine dreizähnige hydrolysierbare Gruppe ersetzt sein können, und n der Wertigkeit des Elements entspricht und häufig 3 oder 4 ist.

Mit Vorteil ist M ausgewählt aus der Gruppe enthaltend Mg, B, Al, Ga, In, Si, Ge, Sn, Pb, Y, Ti, Zr, V, Nb, Ta, Mo, W, Fe, Cu, Ag, Zn, Cd, Ce und La, bevorzugt sind Al, B, Si, Pb, Ti, Zr, besonders bevorzugt Ti und Zr. Ti ist besonders wegen der Bildung von photokatalytisch aktiver TiO₂-Partikel interessant.

In der Verbindung der Formel (I) ist mindestens eine hydrolysierbare Gruppe X lipophil. Bevorzugt sind alle Gruppen X der Formel (I) lipophil. Lipophile Gruppen bevorzugt einen gesättigten, ungesättigten oder aromatischen, verzweigten oder unverzweigten Kohlenwasserstoffrest mit mindestens 4 und bevorzugt mindestens 5 Kohlenstoffatomen.

Beispiele für bevorzugte Alkoxygruppen sind C₄-C₂₀-Alkoxy, bevorzugt C₄-C₁₀-Alkoxy, wie n-Butoxy, i-Butoxy, sek.-Butoxy, tert.-Butoxy, lineares oder verzweigtes Pentoxy, Hexoxy, Heptoxy oder Octoxy, wie 2-Ethylhexoxy, Cyclohexyloxy. Die Alkoxygruppe kann verzweigt oder bevorzugt linear sein, eine vorteilhafte verzweigte Alkoxygruppe ist z.B. 2-Ethylhexoxy. Beispiele für Alkenyloxygruppen sind C₄-C₂₀-Alkenyloxy, bevorzugt C₄-C₁₀-Alkenyloxy, wie Butenoxy, Pentenoxy, Hexenoxy, Heptenoxy, Octenoxy und höhere Alkenoxygruppen, wobei Pentenyl und Hexenyl bevorzugt sind, z.B. CH₃CH₂CH=CHCH₂CH₂O- oder CH₂=CH(CH₂)₄O-. Die Alkenyloxygruppe kann verzweigt oder bevorzugt linear sein, die Doppelbindung kann an beliebiger Stelle sein. Es kann auch mehr als eine Doppelbindung vorhanden sein. Beispiele für Alkinyloxygruppen sind C₄-C₂₀-Alkinyloxy, bevorzugt C₄-C₁₀-Alkinyloxy, wie Pentinyloxy oder Hexinyloxy.

Lipophile Aryloxy-, Aralkyloxy- und Alkaryloxygruppen können z.B. 6 bis 20, bevorzugt 6 bis 15 Kohlenstoffatome aufweisen. Beispiele sind Phenyloxy, Naphthyloxy, Tolyloxy und Benzyloxy. Geeignete lipophile, hydrolysierbare Ethergruppen haben z.B. die allgemeine Formel R¹(-OR²)ₓO-, worin R¹ eine lipophile Alkylgruppe ist, R² eine Alkylengruppe, z.B. mit 1 bis 4 Kohlenstoffatomen, wie Ethylen oder Propylen, ist und x eine ganze Zahl von 1 bis 4, bevorzugt 1 oder 2 ist. Die Gruppe R¹ ist bevorzugt eine C₄-C₂₀-Alkylgruppe, wie Butyl, Pentyl, Hexyl, Cyclohexyl, Heptyl oder Octyl. Konkrete Beispiel sind Butoxyethoxy und Hexoxyethoxy.

Beispiele für Acylgruppen sind C₄-C₂₀-Acyl, bevorzugt C₄-C₁₀-Acyl, wie Butyryl, Valeroyl und Caproyl (C₆-Acyl). Beispiele für Acyloxygruppen, sofern hydrolysierbar, sind C₄-C₂₀-Acyloxy, bevorzugt C₄-C₁₀-Acyloxy, wie Butyryloxy, Valeroyloxy und Caproyloxy. Alkylgruppen, sofern hydrolysierbar, haben z.B. 4 bis 20 bevorzugt 4 bis 10 Kohlenstoffatome. Beispiele sind die vorstehend für die Ether genannten Gruppen R¹.

Weitere Beispiele für hydrolysierbare Gruppen X sind z.B. Halogen (F, Cl, Br oder I, insbesondere Cl und Br), C₁₋₄-Alkoxy, wie z.B. Ethoxy, n-Propoxy, i-Propoxy, n-Butoxy, C₁₋₃-Acyloxy, wie z.B. Acetoxy oder Propionyloxy, C₁-C₃-Alkenyloxy, wie Vinyl oder Allyloxy, C₁-C₃-Alkinyloxy oder C₂₋₃-Alkylcarbonyl, wie z. B. Acetyl.

Beispiele für hydrolysierbare Verbindungen mit bevorzugten lipophilen Gruppen sind z.B. Al(O-n-C₄H₉)₃, Al(O-sek. -C₄H₉)₃, Al(OC₂H₄OC₄H₉)₃, Ti(OC₄H₉)₄, Ti(pentoxy)₄, Ti(hexoxy)₄, Ti(2-ethylhexoxy)₄, Zr(OC₄H₉)₄, Zr(pentoxy)₄, Zr(hexoxy)₄, Zr(2-ethylhexoxy)₄, sowie Zr-Verbindungen, die komplexierende Reste aufweisen, wie z.B. β-Diketon- und (Meth)acrylreste, Si(OC₄H₉)₄, wobei die genannten Pentoxy- und Hexoxyreste linear oder verzweigt sein können.

Beispiele für weitere hydrolysierbare Verbindungen sind Al(OCH₃)₃, Al(OC₂H₅)₃, Al(O-n-C₃H₇)₃, Al(O-i-C₃H₇)₃, AlCl₃, AlCl(OH)₂, Ti(OCH₃)₄, Ti(OC₂N₅)₄, TiCl₄, Ti(OC₂H₅)₄, Ti(O-n-C₃H₇)₄, Ti(O-i-C₃H₇)₄, ZrCl₄, Zr(OC₂H₅)₄, Zr(O-n-C₃H₇)₄, Zr(O-i-C₃H₇)₄, ZrOCl₂, Borsäure, BCl₃, B(OCH₃)₃, B(OC₂H₅)₃, SnCl₄, Sn(OCH₃)₄, Sn(OC₂H₅)₄, Si(OOCCH₃)₄, VOCl₃ und VO(OCH₃)₃, Si(OCH₃)₄, Si(OC₂H₅)₄, Si(O-n- oder i-C₃H₇)₄, SiCl₄ und HSiCl₃.

Verbindungen mit vorstehend genannten hydrolysierbaren Gruppen, die nicht lipophil sind, können als Ausgangsverbindungen zur Herstellung von Verbindungen mit lipophilen hydrolysierbaren Gruppen verwendet werden.

Die hydrolysierbaren Verbindungen mit den genannten lipophilen hydrolysierbaren Gruppen können im Handel erhältlich sein. Sie können auch aus anderen hydrolysierbaren Verbindungen hergestellt werden, z.B. durch Austauschreaktionen. Dies kann z.B. zweckmäßig sein, wenn andere hydrolysierbare Verbindungen leichter zugänglich sind. So kann z.B. ein Metall- oder Halbmetallalkoxid, wie ein Metallethoxid oder -propoxid, mit einem höheren Alkohol, z.B. Pentanol, Hexanol oder 2-Ethylhexanol, umgesetzt werden, um die Alkoxygruppe des Alkoxids durch die Alkoxygruppe des höheren Alkohols zu ersetzen. Die Austauschreaktion kann vollständig oder nur teilweise durchgeführt werden.

Eine solche Austauschreaktion kann auch verwendet werden, um die gewünschten Verbindungen mit hydrolysierbaren, lipophilen Gruppen aus anderen hydrolysierbaren Verbindungen in situ zu bilden und ohne Isolierung direkt zu den gewünschten Teilchen umzusetzen.

Die hydrolysierbaren Metall- oder Halbmetallverbindungen, z.B. solche der obigen Formel (I), können auch komplexierende Reste aufweisen, wie z.B. β-Diketon- und (Meth)acrylreste. Insbesondere bei den reaktionsfähigeren Alkoxiden (z.B. von Al, Ti, Zr usw.) kann es sich unter Umständen empfehlen, diese in komplexierter Form einzusetzen, wobei Beispiele für geeignete Komplexierungsmittel ungesättigte Carbonsäuren und β-DicarbonylVerbindungen, wie z.B. Methacrylsäure, Acetylaceton und Acetessigsäureethylester, sind.

Es können auch hydrolysierbare Verbindungen eingesetzt werden, die mindestens eine nicht hydrolysierbare Gruppe enthalten. Beispiele sind Silane der allgemeinen Formel

RₐSiX₍₄₋ₐ₎ (II),

worin die Reste R gleich oder verschieden sind und nicht hydrolysierbare Gruppen darstellen, die Reste X gleich oder verschieden sind und hydrolysierbare Gruppen oder Hydroxygruppen bedeuten und a den Wert 1, 2 oder 3 hat, oder ein davon abgeleitetes Oligomer. Der Wert a ist bevorzugt 1 oder 2.

In der allgemeinen Formel (II)) sind die hydrolysierbaren Gruppen X, die gleich oder voneinander verschieden sein können, beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugswei-se C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen (insbesondere Ethoxy und Methoxy) und Acyloxygruppen. Sofern mit einem Silan der Formel (II)) hydrolysierbare lipophile Gruppen in die Nanopartikel eingeführt werden sollen, kann es bei X um eine der vorstehend z.B. bei den Verbindungen der Formel (I) beschriebenen hydrolysierbaren lipophilen Gruppen handeln.

Die Zusammensetzung enthält erfindungsgemäß mindestens eine ionische Flüssigkeit. Als solche werden Salze, meistens mit mindestens einer organischen Komponente, bezeichnet, welche bei Temperaturen von unter 100 °C, vorzugsweise Raumtemperatur, flüssig sind. Durch geeignete Wahl der Kombination von Kationen und Anionen ist es möglich, die Eigenschaften der ionischen Flüssigkeit entsprechend den gewünschten Eigenschaften, wie beispielsweise Viskosität, Löslichkeit der Komponenten, thermische oder photochemische Stabilität, Dichte, Schmelzpunkt, Polarität oder Hydrophobie in einem großen Bereich einzustellen.

Da die meisten ionischen Flüssigkeiten weder entzündlich sind noch einen messbaren Dampfdruck besitzen, werden sie bereits in vielen Reaktionen als Ersatz oder Zusatz für herkömmliche Lösungsmittel eingesetzt.

Bevorzugt entsprechen die ionische Flüssigkeit oder die ionischen Flüssigkeiten der allgemeinen Formel K⁺A⁻.

Die Kationen (K⁺) sind bevorzugt aus der Gruppe der Ammonium-, Phosphonium-, Uronium-, Thiouronium-, Guanidiniumkationen oder heterocyclischen Kationen ausgewählt.

Als Ammonium-Kationen können Kationen entsprechend der allgemeinen Formel (1)

[NR₄]⁺

gewählt werden, wobei
R jeweils unabhängig voneinander H, mit der Maßgabe, dass minimal zwei Substituenten R in Formel (1) H sind,
OR', NR'₂, mit der Maßgabe, dass maximal ein Substituent R in Formel (1) OR', NR'₂ ist,
geradkettiges oder verzweigtes Alkyl mit 1-20 C-Atomen, geradkettiges oder verzweigtes Alkyl mit 2-20 C-Atomen und einer oder mehreren Doppelbindungen,
geradkettiges oder verzweigtes Alkyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann,
wobei ein oder mehrere R teilweise oder vollständig mit Halogenen, oder teilweise mit -OH, -OR', -CN, -C(O)OH, -C(O)NR'₂, -SO₂NR'₂, -SO₂OH, -NO₂ substituiert sein können, und wobei ein oder mehrere nicht benachbarte und nicht α-ständige Kohlenstoffatome des R durch Atome und / oder Atomgruppierungen ausgewählt aus der Gruppe -O-, -S-, -S(O)-, -SO₂-, -C(O)-, -C(O)O-, -N⁺R'₂-, -P(O)R'O-, -C(O)NR'-, -SO₂NR'-, -OP(O)R'O-, -P(O) (NR'₂)NR'-, -PR'₂=N- oder -P(O)R'- ersetzt sein können mit R'=H, nicht, teilweise, oder perfluoriertes C₁- bis C₆-Alkyl, C₃- bis C₇-Cycloalkyl, unsubstituiertes oder substituiertes Phenyl sein kann.

Als Phosphonium-Kationen können Kationen entsprechend der allgemeinen Formel (2)

[PR²₄]⁺

gewählt werden, wobei
R jeweils unabhängig voneinander
H, OR', NR'₂,
geradkettiges oder verzweigtes Alkyl mit 1-20 C-Atomen, geradkettiges oder verzweigtes Alkyl mit 2-20 C-Atomen und einer oder mehreren Doppelbindungen,
geradkettiges oder verzweigtes Alkyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere R² teilweise oder vollständig mit Halogenen, oder teilweise mit -OH, -OR¹, -CN, -C(O)OH, -C(O)NR'₂, -SO₂NR'₂, -SO₂OH, -NO₂ substituiert sein können, und wobei ein oder mehrere nicht benachbarte und nicht α-ständige Kohlenstoffatome des R² durch Atome und / oder Atomgruppierungen ausgewählt aus der Gruppe -O-, -S-, -S(O)-, -SO₂-, -C(O)-, -C(O)O-, -N⁺R'₂-, -P(O)R'O-, -C(O)NR'-, -SO₂NR'-, -OP(O)R'O-, -P(O) (NR'₂)NR'-, -PR'₂=N- oder -P(O)R'- ersetzt sein können mit R'=H, nicht, teilweise, oder perfluoriertes C₁- bis C₆-Alkyl, C₃- bis C₇-Cycloalkyl, unsubstituiertes oder substituiertes Phenyl.

Als Uronium-Kationen können Kationen entsprechend der allgemeinen Formel (3)

[(R³R⁴N)-C(=OR⁵)(NR⁶R⁷)]⁺

gewählt werden, wobei
R³ bis R⁷ jeweils unabhängig voneinander
H, wobei H für R⁵ ausgeschlossen wird,
geradkettiges oder verzweigtes Alkyl mit 1-20 C-Atomen, geradkettiges oder verzweigtes Alkyl mit 2-20 C-Atomen und einer oder mehreren Doppelbindungen,
geradkettiges oder verzweigtes Alkyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere der R³ bis R⁷ teilweise oder vollständig mit Halogenen, oder teilweise mit -OH, -OR', -CN, -C(O)OH, -C(O)NR'₂, -SO₂NR'₂, -SO₂OH, -NO₂ substituiert sein können, und wobei ein oder mehrere nicht benachbarte und nicht α-ständige Kohlenstoffatome von R³ bis R⁷ durch Atome und / oder Atomgruppierungen ausgewählt aus der Gruppe -O-, -S-, -S(O)-, -SO₂-, -C(O)-, -C(O)O-,-N⁺R'₂-, -P(O)R'O-, -C(O)NR'-, -SO₂NR'-, -OP(O)R'O-, -P(O)(NR'₂)NR'-, -PR'₂=N- oder -P(O)R'- ersetzt sein können mit R'=H, nicht, teilweise, oder perfluoriertes C₁- bis C₆-Alkyl, C₃- bis C₇-Cycloalkyl, unsubstituiertes oder substituiertes Phenyl.

Als Thiouronium-Kationen können Kationen entsprechend der allgemeinen Formel (4)

[(R³R⁴N)-C(=SR⁵)(NR⁶R⁷)]⁺

gewählt werden, wobei
R³ bis R⁷ jeweils unabhängig voneinander
H, wobei H für R⁵ ausgeschlossen wird,
geradkettiges oder verzweigtes Alkyl mit 1-20 C-Atomen, geradkettiges oder verzweigtes Alkyl mit 2-20 C-Atomen und einer oder mehreren Doppelbindungen,
geradkettiges oder verzweigtes Alkyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere der R³ bis R⁷ teilweise oder vollständig mit Halogenen, oder teilweise mit -OH, -OR', -CN, -C(O)OH, -C(O)NR'₂, -SO₂NR'₂, -SO₂OH, -NO₂ substituiert sein können, und wobei ein oder mehrere nicht benachbarte und nicht α-ständige Kohlenstoffatome von R³ bis R⁷ durch Atome und / oder Atomgruppierungen ausgewählt aus der Gruppe -O-, -S-, -S(O)-, -SO₂-, -C(O)-, -C(O)O-,-N⁺R'₂-, -P(O)R'O-, -C(O)NR'-, -SO₂NR'-, -OP(O)R'O-, -P(O) (NR`₂) NR' -, -PR'₂=N- oder -P(O)R'- ersetzt sein können mit R'=H, nicht, teilweise, oder perfluoriertes C₁- bis C₆-Alkyl, C₃- bis C₇-Cycloalkyl, unsubstituiertes oder substituiertes Phenyl.

Als Guanidinium-Kationen können Kationen entsprechend der allgemeinen Formel (5)

[C(NR⁸R⁹)(NR¹⁰R¹¹)(NR¹²R¹³)]⁺

gewählt werden, wobei
R⁸ bis R¹³ jeweils unabhängig voneinander
H, -CN, -NR'₂, -OR',
geradkettiges oder verzweigtes Alkyl mit 1-20 C-Atomen, geradkettiges oder verzweigtes Alkyl mit 2-20 C-Atomen und einer oder mehreren Doppelbindungen,
geradkettiges oder verzweigtes Alkyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere der R⁸ bis R¹³ teilweise oder vollständig mit Halogenen, oder teilweise mit -OH, -OR', -CN, -C(O)OH, -C(O)NR'₂, -SO₂NR'₂, -SO₂OH, -NO₂ substituiert sein können, und wobei ein oder mehrere nicht benachbarte und nicht α-ständige Kohlenstoffatome von R⁸ bis R¹³ durch Atome und / oder Atomgruppierungen ausgewählt aus der Gruppe -O-, -S-, -S(O)-, -SO₂-, -C(O)-, -C(O)O-,-N⁺R'₂-, -P(O)R'O- , -C(O)NR'-, -SO₂NR'-, -OP(O)R'O-, -P(O) (NR'₂)NR'-, -PR'₂=N- oder -P(O)R'- ersetzt sein können mit R'=H, nicht, teilweise, oder perfluoriertes C₁- bis C₆-Alkyl, C₃- bis C₇-Cycloalkyl, unsubstituiertes oder substituiertes Phenyl sein kann.

Als heterocyclische Kationen können Kationen entsprechend der allgemeinen Formel (6)

[HetN]⁺

gewählt werden, wobei
[HetN]⁺ ausgewählt ist aus der Gruppe enthaltend Imidazolium, 1H-Pyrazolium, 3H-Pyrazolium, 4H-Pyrazolium, 1-Pyrazolinium, 2-Pyrazolinium, 3-Pyrazolinium, 2,3-Dihydro-Imidazolinium, 4,5-Dihydroimidazolinium, 2,5-Dihydro-Imidazolinium, Pyrrolidinium, 1,2,4-Triazolium, 1,2,3-Triazolium, Pyridinium, Pyridazinium, Pyrimidinium, Piperidinium, Morpholinium, Pyrazinimium, Thiazolium, Oxazolium, Indolium, Chinolinium, Isochinolinium, Chinoxalinium und Indolinium. Die Kationen können verschiedene oder gleiche Substituenten entsprechend der oben für R⁸ angegebenen Substitutionen aufweisen.

[HetN]⁺ sind bevorzugt Verbindungen der allgemeinen Formel (7) 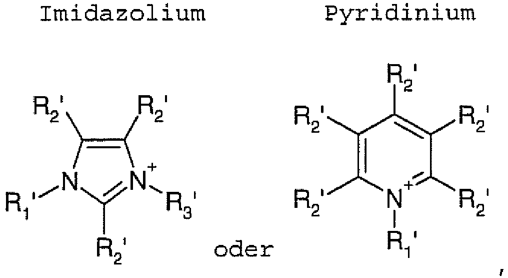 wobei die Substituenten R₁' bis R₃' jeweils unabhängig voneinander
H, -CN, -NR'₂, -OR', P(O)R'₂, -P(O)(OR')₂, -P(O)NR'₂)₂, -C(O)R', -C(O)OR',
geradkettiges oder verzweigtes Alkyl mit 1-20 C-Atomen, geradkettiges oder verzweigtes Alkyl mit 2-20 C-Atomen und einer oder mehreren Doppelbindungen,
geradkettiges oder verzweigtes Alkyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann,
gesättigtes, teilweise oder vollständig Heteroaryl, Heteroaryl-C₁-C₆-alkyl oder Aryl-C₁-C₆-alkyl bedeutet,
wobei die Substituenten R₁', R₂' und / oder R₃' zusammen auch ein Ringsystem bilden können,
wobei ein oder mehrere der Substituenten R₁' bis R₃' teilweise oder vollständig mit Halogenen, oder teilweise mit -OH, -OR', -CN, -C(O)OH, -C(O)NR'₂, -SO₂NR'₂, -SO₂OH, -NO₂ substituiert sein können, und wobei ein oder mehrere nicht benachbarte und nicht am Heteroatom gebundene Kohlenstoffatome der Substituenten R₁' bis R₃' durch Atome und / oder Atomgruppierungen ausgewählt aus der Gruppe -O-, -S-, -S(O)-, -SO₂-, -C(O)*-,* -C(O)O-, -N⁺R'₂-, -P(O)R'O-, -C(O)NR'-, -SO₂NR'-, -OP(O)R'O-, -P(O) (NR'₂)NR'-, -PR'₂=N- oder -P(O)R'- ersetzt sein können mit R'=H, nicht, teilweise, oder perfluoriertes C₁- bis C₆-Alkyl, C₃- bis C₇-Cycloalkyl, unsubstituiertes oder substituiertes Phenyl.

Unter vollständig ungesättigten Substituenten werden im Sinne der vorliegenden Erfindung auch aromatische Substituenten verstanden.

Als Substituenten R und R² bis R¹³ der Verbindungen der Formeln (1) bis (5) kommen neben Wasserstoff bevorzugt in C₁- bis C₂₀-, insbesondere C₁- bis C₁₄-Alkylgruppen, und gesättigte oder ungesättigte, d.h. auch aromatische, C₃- bis C₇-Cycloalkylgruppen, die mit C₁- bis C₆-Alkylgruppen substituiert sein können, insbesondere Phenyl.

Die Substituenten R und R² sind bevorzugt Methyl, Ethyl, *n-*Propyl, Isopropyl, *n*-Butyl, *sek*.-Butyl, *tert*.-Butyl, Pentyl, Hexyl, Octyl, Decyl oder Tetradecyl.

Die Substituenten R³ bis R¹³ sind jeweils unabhängig voneinander bevorzugt eine geradkettige oder verzweigte Alkylgruppe mit 1 bis 10 C-Atomen. Die Substituenten R³ und R⁴, R⁶ und R⁷, R⁸ und R⁹, R¹⁰ und R¹¹ und R¹² und R¹³ in den Verbindungen der Formeln (3) bis (5) können dabei gleich und verschieden sein. Besonders bevorzugt sind R³ bis R¹³ jeweils unabhängig voneinander Methyl, Ethyl, *n*-Propyl, Isopropyl, *n*-Butyl, *sek*.-Butyl, *tert*.-Butyl, Pentyl, Hexyl, Octyl, Phenyl, Cyclohexyl oder Benzyl.

Als Substituenten R₁' bis R₃' von Verbindungen der Formel (7) kommen neben Wasserstoff bevorzugt in C₁- bis C₂₀-, insbesondere C₁- bis C₁₂-Alkylgruppen, und gesättigte oder ungesättigte, d.h. auch aromatische, C₃- bis C₇-Cycloalkylgruppen, die mit C₁- bis C₆-Alkylgruppen substituiert sein können, insbesondere Phenyl.

Die Substituenten R₁' bis R₂' sind jeweils unabhängig voneinander bevorzugt Methyl, Ethyl, *n*-Propyl, Isopropyl, *n*-Butyl, *sek*.-Butyl, *tert*.-Butyl, Pentyl, Hexyl, Octyl, Phenyl, Cyclohexyl oder Benzyl, besonders bevorzugt Methyl, Ethyl, *n*-Propyl, *n*-Butyl, *sek*.-Butyl, *tert*.-Butyl oder Hexyl.

Die Substituenten R₂' und R₃' sind jeweils unabhängig voneinander besonders bevorzugt Wasserstoff, Methyl, Ethyl, *n*-Propyl, Isopropyl, *n*-Butyl, *sek*.-Butyl, *tert*.-Butyl, Pentyl, Hexyl, Cyclohexyl oder Benzyl.

Beispiele für Imidazolonium-Ionen sind 1-*n*-Hexyl-3-methylimidazolium [HMIM], 1-Methyl-3-*n*-octylimidazolium [OMIM], 1-*n*-Butyl-3-methylimidazolium [BMIM], 1-*n*-Octyl-3-methylimidazolium, 1-Vinyl-3-methylimidazolium [BVIM], 1-Ethyl-3-methylimidazolium, 1-(2-Hydroxyethyl)-3-methylimidazolium.

Beispiele für Pymidinium-Ionen sind N-Butylpyridinium und N-Octylpyridinium.

Für weitere erfindungsgemäße Kationen sei auf die deutsche Patentanmeldung DE 10 2005 025 315 A1 verwiesen, worauf hiermit explizit Bezug genommen wird.

Die Anionen (A⁻) sind bevorzugt aus der Gruppe der Halogenide, Acetate, Phosphate, Phosphinate, Aluminate, Borate, Sulfate, Sulfonate, Imide, Amide oder Cyanate ausgewählt.

Im Falle der Halogenide werden Chloride, Bromide, Iodide und Polyhalogenide, wie I₃⁻ oder Br₃⁻ bevorzugt.

Im Falle der Phosphate werden fluorierte Phosphate, wie Hexafluorophosphate oder tris(pentafluoroethyl)trifluorophosphat oder ein- oder zweifach alkylierte und / oder benzylierte Phosphate, gegebenenfalls vollständig oder teilweise substituiert, insbesondere vollständig oder teilweise fluoriert bevorzugt.

Im Falle der Borate werden Tetrahalogenidborate, wie beispielsweise [BF₄]⁻, oder anionische Borkomplexe mit 1,2-dicarbonylverbindungen, wie beispielsweise Bisoxalato(2⁻)-borate bevorzugt.

Im Falle der Sulfate werden Hydrogensulfate oder einfach alkylierte oder benzylierte Sulfate, gegebenenfalls vollständig oder teilweise substituiert, insbesondere vollständig oder teilweise fluoriert bevorzugt. Beispiele hierfür ist Methylsulfat und Ethylsulfat.

Im Falle der Sulfonate werden Triflate und Tosylate und ihre Derivate, wie beispielsweise Trifluormethansulfonate, *para-*Toluolsulfonate oder Mesitylsulfonate bevorzugt.

Im Falle der Imide werden Imide von Sulfonaten, wie beispielsweise Bis(trifluoromethansulfonyl)imid bevorzugt.

Im Falle der Amide wird Dicyanamid bevorzugt.

Im Falle der Cyanate sind Cyanat, Isocyanat oder Thiocyanat bevorzugt.

Besonders bevorzugte ionische Flüssigkeiten mit der allgemeinen Formel [K⁺A⁻] sind 1-*n*-Butyl-3-methylimidazolium-chlorid ([BMIM]Cl), 1-*n*-Hexyl-3-methylimidazolium-chlorid ([HMIM]Cl), 1-Methyl-3-*n*-octylimidazolium-chlorid, ([OMIM]Cl), 1-*n*-Butyl-3-methylimidazolium-bromid ([BMIM]Br), 1-*n*-Hexyl-3-methylimidazolium-bromid ([HMIM]Br), 1-Methyl-3-*n-*octylimidazolium-bromid, ([OMTM]Br), 1-*n*-Butyl-3-methylimidazolium-tetrafluoroborat ([BMIM] [BF₄]), 1-*n*-Hexyl-3-methylimidazolium-tetrafluoroborat ([HMIM] [BF₄]), 1-Methyl-3-*n-*octylimidazolium-tetrafluoroborat, ([OMIM] [BF₄]), 1-*n*-Butyl-3-methylimidazolium-hexafluorophosphat ([BMIM][PF₆]), 1-*n*-Hexyl-3-methylimidazolium-hexafluorophosphat ([HMIM] [PF₆]) oder 1-Methyl-3-n-octylimidazolium-hexafluorophosphat, ([OMTM][PF₆]), 1-*n*-Butyl-3-methylimidazolium-bis(trifluoromethansulfonyl)imid ([BMIM][NTf₂]), 1-*n*-Hexyl-3-methylimidazolium-bis(trifluoromethansulfonyl)imid ([HMIM][NTf₂]) oder 1-Methyl-3-*n*-octylimidazolium-bis(trifluoromethansulfonyl)imid ([OMIM][NTf₂]), 1-*n*-Buty1-3-methylimidazolium-methylsulfonat ([BMIM] [SO₃Me]), 1-*n*-Hexyl-3-methylimidazolium-methylsulfonat ([HMIM] [SO₃Me]) oder 1-Methyl-3-*n*-octylimidazolium-methylsulfonat ([OMIM][SO₃Me]), 1-*n*-Butyl-3-methylimidazolium-methylsulfat ([BMIM][SO₄Me]), 1-*n*-Hexyl-3-methylimidazolium-methylsulfat ([HMIM][SO₄Me]) oder 1-Methyl-3-*n*-octylimidazolium-methylsulfat ([OMIM][SO₄Me]), 1-*n*-Butyl-3-methylimidazolium-triflat ([BMIM][OTf]), 1-*n*-Hexyl-3-methylimidazolium-triflat ([HMIM][OTf]) oder 1-Methyl-3-*n*-octylimidazolium-triflat ([OMIM][OTf]). Viele ionischen Flüssigkeiten sind kommerziell erhältlich, beispielsweise von Merck (Darmstadt, DE), Sigma-Aldrich (St. Louis, US), Solvent Innovation (Köln, DE) oder Ionic Liquids Technologies GmbH (Denzlingen, DE).

Im Falle von Titanverbindungen als hydrolysierbare Metallverbindungen sind ionische Flüssigkeiten mit Imidazoloniumionen, bevorzugt 1-*n*-Butyl-3-methylimidazolium-chlorid [BMIM], mit den Anionen ausgewählt aus der Gruppe der Halogenide, Acetate, Phosphinate, Aluminate, Sulfate, Sulfonate, Imide, Amide oder Cyanate, besonders bevorzugt Chlorid, Bromid, NTf₂, SO₃Me, SO₄Me und OTf, bevorzugt.

Im Falle von Titanverbindungen besonders bevorzugte ionische Flüssigkeiten sind 1-*n*-Butyl-3-methylimidazolium-chlorid ([BMIM]Cl), 1-*n*-Butyl-3-methylimidazolium-bromid ([BMIM]Br), 1-*n*-Butyl-3-methylimidazolium-bis(trifluoromethansulfonyl)imid ([BMIM] [NTf₂]), 1-*n*-Butyl-3-methylimidazolium-methylsulfonat ([BMIM] [SO₃Me]), 1-*n*-Butyl-3-methylimidazolium-methylsulfat ([BMIM] [SO₄Me]), 1-*n*-Butyl-3-methylimidazolium-triflat ([BMIM] [OTf]) bevorzugt.

Mit Vorteil liegt das Verhältnis gemessen in mmol von hydrolysierbare Metallverbindung und ionischer Flüssigkeit zwischen 10:1 und 1:10, bevorzugt zwischen 5:1 und 1:5. Mit Vorteil wird mehr ionische Flüssigkeit eingesetzt. Das Verhältnis liegt dann zwischen 1:1 und 10:1, bevorzugt zwischen 1:1 und 5:1, besonders bevorzugt zwischen 1.5:1 und 5:1 und zwischen 1.5:1 und 3:1, besonders bevorzugt 2:1.

Die Zusammensetzung enthält noch mindestens eine Verbindung mit mindestens einer Hydroxylgruppe. Mit Vorteil ist diese Verbindung das Lösungsmittel für die hydrolysierbare Verbindung und die ionische Flüssigkeit. Bevorzugt handelt es sich um eine Verbindung mit einem Siedepunkt von unter 200 °C (bei Normaldruck). Bevorzugt sind Verbindungen, welche auch als Alkoxyliganden für die hydrolysierbare Metallverbindung eingesetzt werden können. Solche sind beispielsweise niedere aliphatische Alkohole (C₁-C₆-Alkohole), wie Ethanol, 1-Propanol, i-Propanol, sek.-Butanol, tert.-Butanol, Isobutylalkohol, n-Butanol und die Pentanol-Isomeren, insbesondere 1- Pentanol. Bevorzugt sind dabei Methanol, Ethanol, Propanol, iso-Propanol und n-Butanol.

Die mindestens eine Verbindung mit einer Hydroxylgruppe kann Spuren von Wasser enthalten, welche für die Kondensation der hydrolysierbaren Metallverbindung wichtig sind. Erfindungsgemäß liegt der Wassergehalt unter 10 % bevorzugt unter 5 %, besonders bevorzugt unter 2 %. In einer weiteren Ausführungsform kann der Gehalt zwischen unter 0.1 % und 10 % (gemessen in Gew.-% mit Karl-Fischer-Methode) liegen. Durch die Menge an Wasser kann die Größe der entstehenden Partikel beeinflusst werden. Bevorzugt ist ein Gehalt zwischen unter 0.1 % und 2 %. In einer bevorzugten Ausführungsform beträgt der Gehalt 2 %.

Mit Vorteil ist der Wassergehalt der hydrolysierbaren Verbindung der einzige Eintrag von Wasser in die Zusammensetzung. Die ionische Flüssigkeit wird nach dem Stand der Technik getrocknet eingesetzt.

Als bevorzugte Reihenfolge der Zugabe wird die hydrolysierbare Metallverbindung zu einer Mischung der ionischen Flüssigkeit und der Verbindung mit mindestens einer Hydroxylgruppe gegeben. Mit Vorteil liegt diese Verbindung im deutlichen Überschuss im Verhältnis zu der hydrolysierbaren Metallverbindung vor. Gemessen in mmol liegt das Verhältnis bevorzugt zwischen 10:1 und 100:1, bevorzugt zwischen 20:1 und 60:1.

Die Zusammensetzung enthält im Gegensatz zum Stand der Technik keinen Katalysator für die Hydrolyse der Metallverbindung, wie beispielsweise Säure oder Base. Ohne an eine bestimmte Theorie gebunden zu sein, wird angenommen, dass die ionische Flüssigkeit die Bildung bestimmter Precursorverbindungen begünstigt, welche unter hydrothermalen Bedingungen zu den nanoskaligen Teilchen reagieren.

Die sich ergebenden Mischung wird dann bei einer Temperatur von mindestens 60 °C unter Bildung einer Dispersion oder eines Niederschlags von nanoskaligen Teilchen behandelt. Diese Wärmebehandlung erfolgt hydrothermal.

Die Wärmebehandlung erfolgt vorzugsweise über einen Zeitraum von 0,5 bis 30 h, bevorzugt 5 bis 24 h, wobei die Dauer von der Temperatur und dem gegebenenfalls angelegten Druck abhängt. Beispielsweise erhält man im Falle von Ti-Verbindungen Anatas durch Hydrothermalbehandlung bei 200 °C und autogenem Druck nach einer Reaktionsdauer von 12 h in nanopartikulärer kristalliner Form.

Unter einer Hydrothermal-Behandlung versteht man im Allgemeinen eine Wärmebehandlung einer wässrigen Lösung oder Suspension unter Überdruck, z. B bei einer Temperatur über dem Siedepunkt des Lösungsmittels und einem Druck über 1 bar.

In der vorliegenden Erfindung wird auch eine Wärmebehandlung in einem überwiegend organischen Lösungsmittel, das wenn überhaupt nur wenig Wasser enthält, unter Überdruck als hydrothermale Behandlung verstanden.

Bei der hydrothermalen Behandlung wird die Mischung in einem geschlossenen Behälter oder einem geschlossenen Autoklaven wärmebehandelt. Die Behandlung erfolgt vorzugsweise bei einer Temperatur im Bereich von 75 °C bis 300 °C, vorzugsweise über 200 °C, bevorzugter 225 bis 275 °C, z. B. etwa 250 °C. Durch die Erwärmung, insbesondere über den Siedepunkt des Lösungsmittels, wird in dem geschlossenen Behälter oder Autoklaven ein Druck aufgebaut (autogener Druck).

Der erhaltene Druck kann z. B. über 1 bar, insbesondere 50 bis 500 bar oder mehr, vorzugsweise 100 bis 300 bar, z. B. 200 bar, betragen. In der Regel erfolgt die Hydrothermalbehandlung mindestens 0.5 h und bevorzugt bis zu 10 oder 15 h.

Die Wärmebehandlung gemäß Schritt b) wird solange durchgeführt, bis die gewünschten Teilchen gebildet sind.

Vorzugsweise macht der kristalline Anteil der erhaltenen dotierten Teilchen mehr als 90%, bevorzugt mehr als 95% und insbesondere mehr als 97% aus, d. h. der amorphe Anteil liegt insbesondere unter 3%, z. B. bei 2%. Die mittlere Teilchengröße (röntgenographisch ermitteltes Volumenmittel) beträgt vorzugsweise nicht mehr als 20 nm, bevorzugter nicht mehr als 15 nm. In einer besonders bevorzugten Ausführungsform werden Teilchen mit einer mittleren Teilchengröße von etwa 2 bis 10 nm erhalten.

Die Teilchen werden vom Lösungsmittel und von der ionischen Flüssigkeit abgetrennt. Hierfür können alle dem Fachmann bekannten Verfahren verwendet werden. Eine Zentrifugation ist besonders geeignet. Gegebenenfalls können vorher flüchtige Bestandteile, wie z.B. die Verbindung mit mindestens einer Hydroxylgruppe, unter Unterdruck, z. B. im Rotationsverdampfer bei 40 mbar, abdestilliert werden.

Die ionische Flüssigkeit kann auf diese Weise regeneriert werden und sogar mehrfach eingesetzt werden.

Die abgetrennten Teilchen werden dann getrocknet (z. B. bei 40 C und 10 mbar). In dieser Form können die Teilchen auch gut gelagert werden. Die Teilchen können auch aus einer wässrigen Suspension gefriergetrocknet werden.

In einer Weiterbildung der Erfindung wird vor Schritt b) eine Behandlung unter Rückfluss durchgeführt. Diese erfolgt zwischen 1 und 10 Stunden. Dabei bildet sich eine Precursorverbindung, welche aus isoliert werden kann. Aus dieser Verbindung können durch hydrothermale Behandlung nanoskalige Partikel erhalten werden. Vor der Behandlung mit Rückfluss kann es erforderlich sein, die Zusammensetzung 1 bis 3 Stunden zu rühren.

Die Erfindung betrifft ein Verfahren zur Herstellung einer Precursorverbindung für die hydrothermale Herstellung von nanoskaligen Partikeln. Diese kann erhalten werden, wenn die Zusammensetzung aus Schritt a) unter Rückfluss behandelt wird, entsprechend der Vorbehandlung, wie vorstehend beschrieben. Danach werden die flüchtigen Bestandteile abdestilliert. Dabei bedeutet abdestillieren bevorzugt die Entfernung am Rotationsverdampfer bei maximal 60 °C und einem minimalen Druck von 20 mbar. Aus diesem Rückstand kann die Precursorverbindung isoliert werden.

In einer bevorzugten Ausführungsform wird dazu der Rückstand in einem aprotischen Lösungsmittel unter Rückfluss gelöst. Aus der erhaltenen Lösung kann die Precursorverbindung bevorzugt durch Kristallisation isoliert werden.

Die aprotischen Lösungsmittel sind bevorzugt polare Lösungsmittel. Beispiele für solche Lösungsmittel sind, Ethylacetat, Acetonitril, Tetrahydrofuran, Aceton, Nitromethan, Dimethylformamid, Dimethylsulfoxid. Es können auch Mischungen eingesetzt werden. Bevorzugt sind Mischungen aus Ethylacetat, Aceton, Tetrahydrofuran oder Aceton.

Beim Abkühlen dieser Lösung bildet sich ein Niederschlag der Precursorverbindung.

Die Erfindung betrifft außerdem ein Verfahren zur Herstellung von nanoskaligen Partikeln, indem die wie vorstehend beschrieben hergestellte Precursorverbindung mit mindestens einer Verbindung mit mindestens einer Hydroxylgruppe gemischt wird und hydrothermal behandelt wird. Das Verhältnis zwischen Precursorverbindung und der Verbindung liegt gemessen in mmol zwischen 10:1 und 1000:1, bevorzugt zwischen 200:1 und 600:1.

Die Mischung wird wie vorstehend beschrieben hydrothermal behandelt. Dafür gelten die gleichen Bedingungen wie für die Zusammensetzung mit der hydrolysierbaren Metallverbindung.

Als besonderen Vorteil ist zur Herstellung der Partikel aus der Precursorverbindung keine Zugabe einer ionischen Flüssigkeit oder eines Katalysators nötig, um nach der hydrothermalen Behandlung kristalline Nanopartikel zu erhalten.

Die Zusammensetzung mit der Precursorverbindung zur Herstellung der nanoskaligen Partikel oder die Zusammensetzung mit der hydrolysierbaren Metallverbindung kann noch weitere Verbindungen zur Herstellung von dotierten Partikeln enthalten. Zur Dotierung kann jede geeignete Metallverbindung eingesetzt werden, z. B. ein Oxid, ein Salz oder eine Komplexverbindung, z. B. Halogenide, Nitrate, Sulfate, Carboxylate (z. B. Acetate) oder Acetylacetonate. Die Verbindung sollte in dem für die Mischung verwendeten Lösungsmittel zweckmäßigerweise löslich sein.

Als Metall eignet sich jedes Metall, insbesondere ein Metall ausgewählt aus der 5. bis 14. Gruppe des Periodensystems der Elemente und der Lanthanoiden und Actiniden. Das Metall kann in der Verbindung in jeder geeigneten Oxidationsvorstufe vorkommen. Beispiele für geeignete Metalle für die Metallverbindung sind W, Mo, Cr, Zn, Cu, Ag, Au, Sn, In, Fe, Co, Ni, Mn, Ru, V, Nb, Ir, Rh, Os, Pd und Pt. Metallverbindungen von W (VI), Mo (VI), Cr (lit), Zn (II), Cu (II), Au (III), Sn (IV), In(III), Fe (III), Co (II), V (V) und Pt (IV) werden bevorzugt verwendet. Sehr gute Ergebnisse werden insbesondere mit W (VI), Mo (VI), Zn (II), Cu (II), Sn (IV), In(III) und Fe (III) erreicht. Konkrete Beispiele für bevorzugte Metallverbindungen sind WO₃, MoO₃, FeCl₃, Silberacetat, Zinkchlorid, Kupfer (II)-chlorid, Indium (III)-oxid und Zinn (IV)-acetat.

Das Mengenverhältnis zwischen der Metallverbindung und der hydrolysierbaren Metallverbindung hängt auch von dem eingesetzten Metall und dessen Oxidationsstufe ab. Im allgemeinen werden z. B. solche Mengenverhältnisse eingesetzt, dass sich ein Molverhältnis von Metall der Metallverbindung (Me') zum Metall der hydrolysierbaren Metallverbindung (Me) (Me'/Me) von 0,0005 : 1 bis 0,2 : 1, bevorzugt 0,001 : 1 bis 0,1 : 1 und bevorzugter 0,005 : 1 bis 0,1 : 1 ergibt.

Anstelle der Metalldotierung kann auch eine Dotierung mit Halbmetall-oder Nichtmetallelementen durchgeführt werden, z. B. mit Kohlenstoff, Stickstoff, Phosphor, Schwefel, Bor, Arsen, Antimon, Selen, Tellur, Chlor, Brom und/oder lod.

Zu diesem Zweck werden entweder die Elemente als solche oder geeignete Elementverbindungen als Dotiermittel eingesetzt. Eine Dotierung ist insbesondere bei Verwendung von Titanverbindungen von Vorteil, um die photokatalytischen Eigenschaften zu beeinflussen.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Tabellen zeigen die verschiedenen Versuche. Für alle Versucht wurde 10 mmol Ti(OⁱPr)₄ (2.84 g) (destilliert unter Vakuum) verwendet. [BMIM] [Cl], [BMIM] [Br], [BMIM] [PF₆], [BMIM] [BF₄], [BMIM] [NTf₂] wurden gemäß Creary, X; Wilis, E. D. *Organic Syntheses* **2005,** 82, 166 hergestellt. [BMIM] [SO₃Me], [BMIM] [SO₄Me] und [BMIM][OTf] wurden von IoLiTec GmbH erworben und wie erhalten verwendet.

Die Pulverdiffraktometrie-Messungen (XRD-Messungen; Röntgenbeugung) wurden mit einem Bruker AXS D8 mit Cu Kα-Strahlung (λ=0.154 nm) bei 40 kV und 40 mA durchgeführt. Ein Positionsempfindlicher Detektor (LynsEye) mit Bruker AXS *"Compound silicon strip*"-Technologie. Die Messungen wurden von 3 ° bis 90 ° (2θ) mit einer Schrittweite von 0.02 ° durchgeführt. Für alle Pulver wurden Glasprobenhalter verwendet. Die Strukturbestimmung und Profilanalyse der Beugungssprekten wurde mit dem Programm TOPAS ausgeführt. Die Linienformen wurden durch Konvolution des Emissionsprofils der Röntgenquelle mit den Intrumentenfehlern und den physikalischen Eigenschaften der Probe bestimmt ("fundamen*tal parameters consolution based approach").* Die mittleren Kistallitgrößen wurden mit der Scherrer-Gleichung berechnet (Scherer Konstante K=1). Die Integralbreite basierend auf einer volumengewichteten Berechnung wurde unter der Annahme einer Verbreiterung durch die Kristallitgröße mit einer Voigt-Funktion dargestellt.

Transmissionselektronenmikroskopie (TEM) oder hochaufgelöste Transmissionselelektronenmikroskopie wurde mit einem JEM-3010 Elektronenmikroskop durchgeführt. Porositätsmessung (*Nitrogen porosimetry*) wurde mit einem Quantuchrome Autosorb6B-Instrument durchgeführt. Die Oberfläche der Partikel wurde mit Hilfe der Brunauer-Emmett-Teller-Gleichung (BET) berechnet.
- Tabelle 1:: Versuche mit [BMIM][Cl] und unterschiedlichen Gehalten an ionischer Flüssigkeit und Wasser;
- Tabelle 2:: Versucht mit unterschiedlichen Alkoholen als Verbindung mit mindestens einer Hydroxylgruppe;
- Tabelle 3:: Versuche mit unterschiedlichen ionischen Flüssigkeiten.
- Tabelle 4:: Reaktionsbedingungen der verschiedenen Versuche;
- Tabelle 5:: Versuche mit unterschiedlichen Edukten bei der Synthese der Partikel.

- Fig. 1: XRD-Messungen der Proben a) S2, S3, S6 und S7; b) S1 bis S7;
- Fig. 2: TEM-Aufnahmen von a) S1, b) S2, c) S3, d) S4, e) S5 und f) HRTEM von S3; Die Insets zeigen ausgewählte Bereiche der Elektronenbeugungsmuster;
- Fig. 3: TEM-Aufnahmen von a) S6; b) HRTEM vom S6; c) S7; Das Inset zeigt einen ausgewählten Bereich des Elektronenbeugungsmusters;
- Fig. 4: XRD-Messungen von a) S10; S11; S12 und b) S8; S9;
- Fig. 5: TEM-Aufnahmen von a) S10; b) S11; c) S12; Die Insets zeigen ausgewählte Bereiche der Elektronenbeugungsmuster;

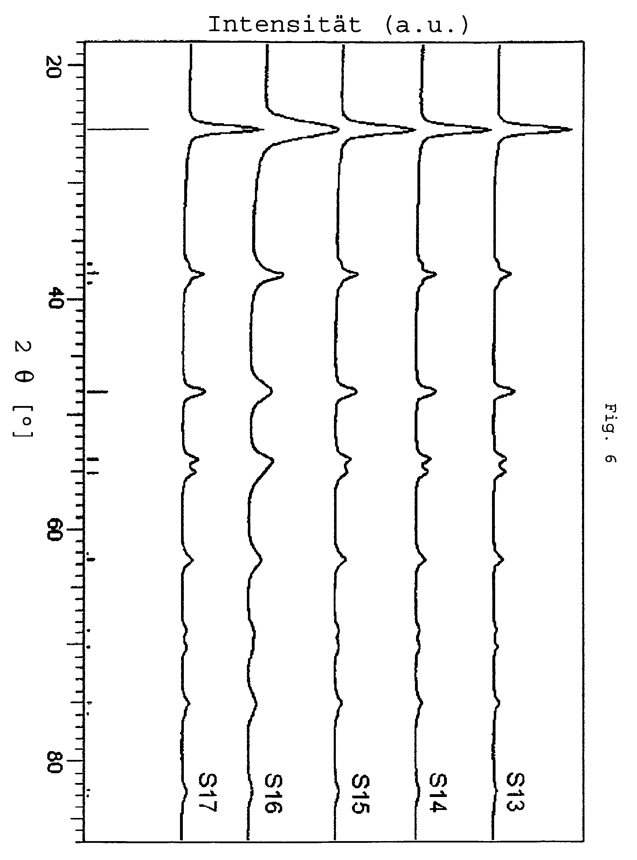

- Fig. 6: XRD-Messungen der Proben S13; S14; S15; S16 und S17;
- Fig. 7:: TEM-Aufnahmen von a) S13; b) S14; c) S15; d) S16; e) S17; Die Insets zeigen ausgewählte Bereiche der Elektronenbeugungsmuster;
- Fig. 8:: XRD-Messungen der Proben S20; S12 und S22;

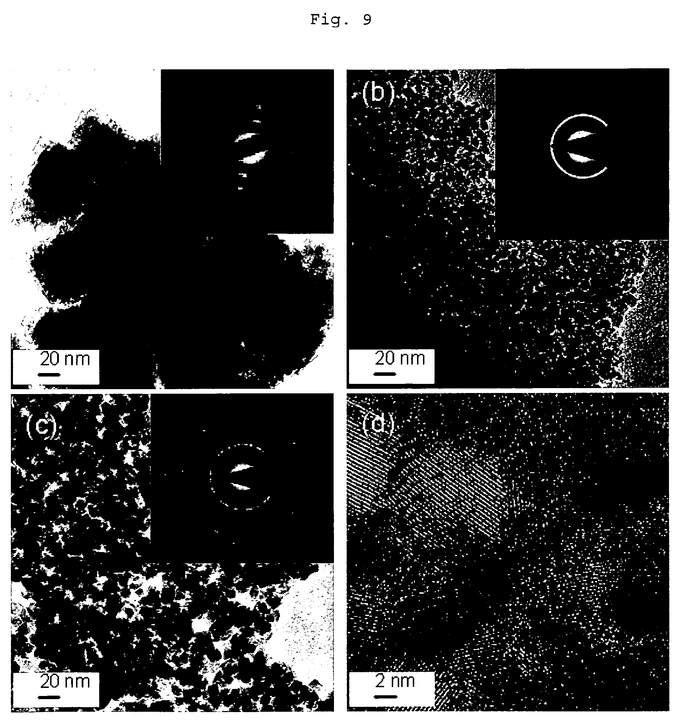

- Fig. 9:: TEM-Aufnahmen von a) S20; b) S21; c) S22; d) HRTEM von S22; Die Insets zeigen ausgewählte Bereiche der Elektronenbeugungsmuster.
- Fig. 10:: XRD-Messungen von ZrO₂-Partikeln.

### Versuche S1 bis S7:

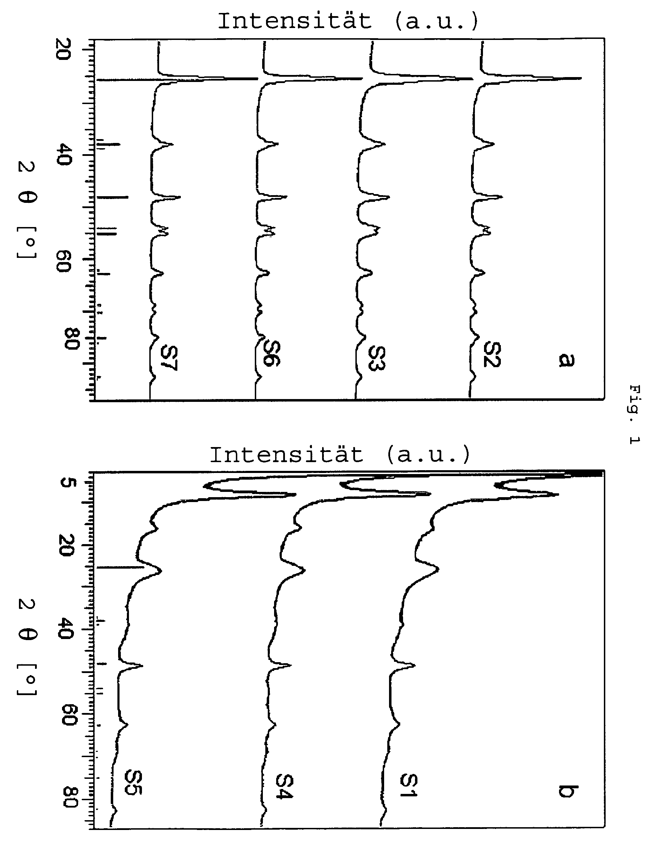

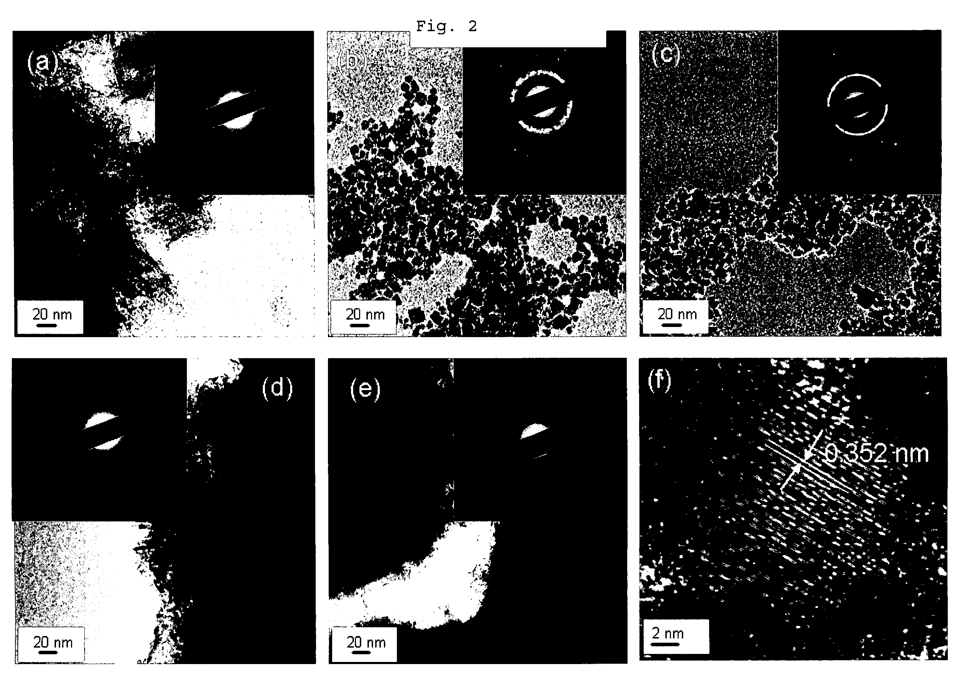

Versuche mit Ethanol als Verbindung mit einer Hydroxylgruppe und [BMIM][Cl] zeigten, dass durch eine Vorbehandlung unter Rückfluss für 4 Stunden Ti₄O₇(OEt)₂₀ erhalten werden konnte. Figur 1 zeigt XRD-Messungen von verschiedenen Proben. Bei einer hydrothermalen Behandlung von 2.75 Stunden (S1) wurde nur teilweise Anatas gebildet (Fig. 1b S1). Erst eine Verlängerung der hydrothermalen Behandlung auf 12 Stunden ergab hochkristallinen Anatas (TiO₂) mit einer Kristallitgröße von 9 nm (nach Scherer-Gleichung; Fig. 1a S2; Tabelle 1). Die TEM-Aufnahmen Figur 2a) und b) bestätigen dieses Ergebnis. Auf der TEM-Aufnahme von S2 (Figur 2a)) sind kugelförmige und würfelähnliche Partikel zu erkennen in Übereinstimmung mit dem Verhältnis der berechneten Signalen ("crystallite size broadening") der (004):(020) Reflektionen von 7:8. Es wurden keine Signale anderer Phasen gemessen.

Ohne eine Vorbehandlung mit Rückfluss konnten ähnliche Ergebnisse erhalten werden (Fig. 1a S3; Fig. 2c), f)) aber mit einer geringeren Größe der Kristallite von 6 nm.

Eine Verringerung des Gehalts an [BMIM][Cl] auf ( S4(0.5 eq.) und S5 (1eq.)) ergab poröse und nur teilweise kristalline Produkte. Bei den XRD-Messungen sind deutlich Signale bei einem kleinen 2θ-Werten zu erkennen (Fig. 1b und Fig. 2 d),e)).

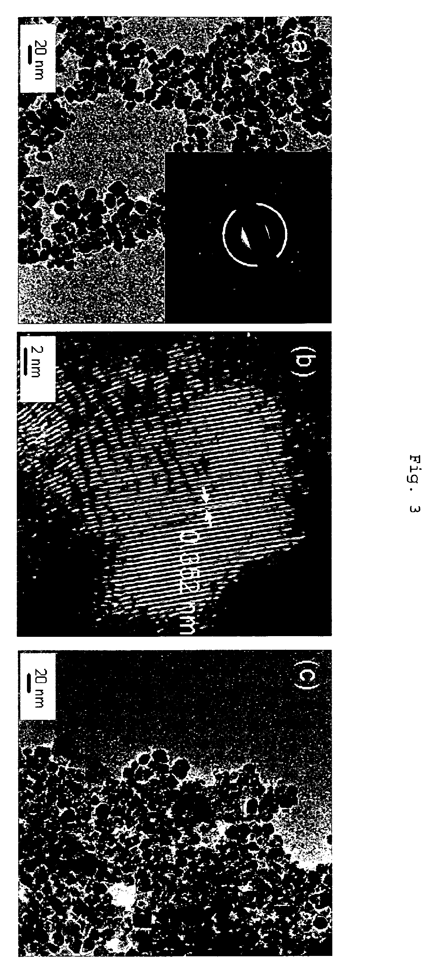

Ein weiterer wichtiger Punkt ist der Wassergehalt der Zusammensetzung. So wurde für die Proben S6 und S7 der Wassergehalt des Ethanols auf 2%, bzw. 5 % erhöht. Es zeigte sich (siehe TEM-Aufnahmen Figur 3), dass bei einem erhöhten Wassergehalt etwas größere würfelähnliche Partikel erhalten wurden (S6 10 nm; S7 11 nm), als für S2 und S3. Das berechnete Kristallitseitenverhältnis der (004):(020) Gitterebenen ist fast 8:8 für S6 und 9:10 für S7. In der HRTEM-Aufnahme von S6 (Figur 3b) sieht man die Partikel parallel zu der (101)-Ebene.

Die Oberfläche der Partikel wurde mit der BET-Methode berechnet (S_{BET}). Die gemessene Oberfläche der Partikel (Tabelle 1) lag zwischen 120 und 163 m²/g.

In Übereinstimmung mit den XRD-Messungen führt eine erhöhte Wassermenge zu einer Abnahme der Oberfläche der Partikel.

### Versuche mit anderen Alkoholen

Es wurden die in Tabelle 2 genannten Proben durchgeführt. Alle Proben wurden ohne Vorbehandlung vorbereitet.

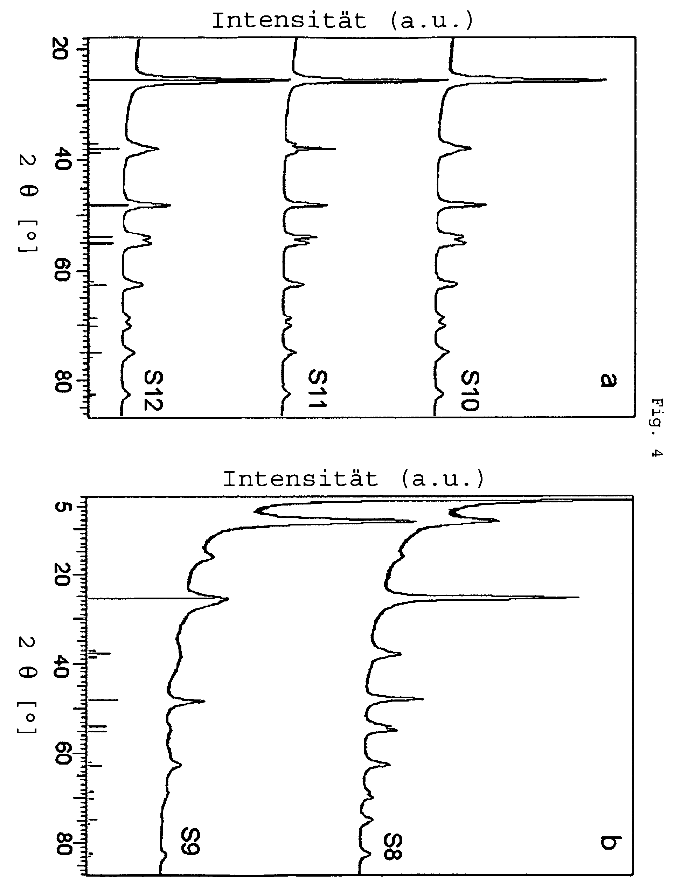

Aus den XRD-Messungen (Figur 4b) ist zu erkennen, dass für PrOH (S8) und ⁱPrOH (S9) mit einem Wassergehalt von unter 0.1 % zusätzlich zu Anatas mindestens eine weitere Phase gebildet wurde, wobei für S8 das Hauptprodukt Anatas ist.

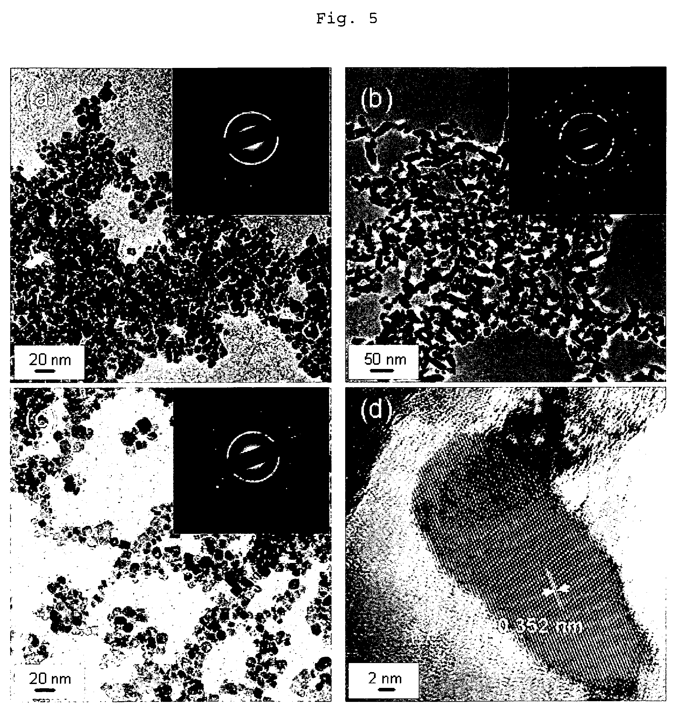

Bei einer Erhöhung des Wassergehalts auf 2 % wurden für PrOH (S10), ⁱPrOH (S11) und BuOH (S12) hochkristalline Anatas-Partikel erhalten. Die mittlere Kristallitgröße liegt zwischen 8 und 13 nm (Tabelle 2). Die Untersuchungen der Verhältnisse der Reflektionen (004):(020) zeigt allerdings ,dass S10 (6:8) und S12 (5:7) quaderförmige Partikel sind, während sich im Falle von S11 bipyramidale Partikel gebildet haben (20:8). Dies ist auch in den TEM-Aufnahmen (Figur 5b), d)) zu erkennen. Die HTEM-Aufnahme Figuf 5 d) zeigt, dass die Partikel auf dem Kupfergitter parallel zu ihrer [101]-Richtung stehen.

### Versuche mit anderen ionischen Flüssigkeiten

Für die Versuche mit anderen ionischen Flüssigkeiten wurde immer Ethanol mit 2 % Wasser eingesetzt. Dies ist für eine vollständige Kondensation des eingesetzten Precursors ausreichend. Tabelle 3 zeigt die eingesetzten Edukte.

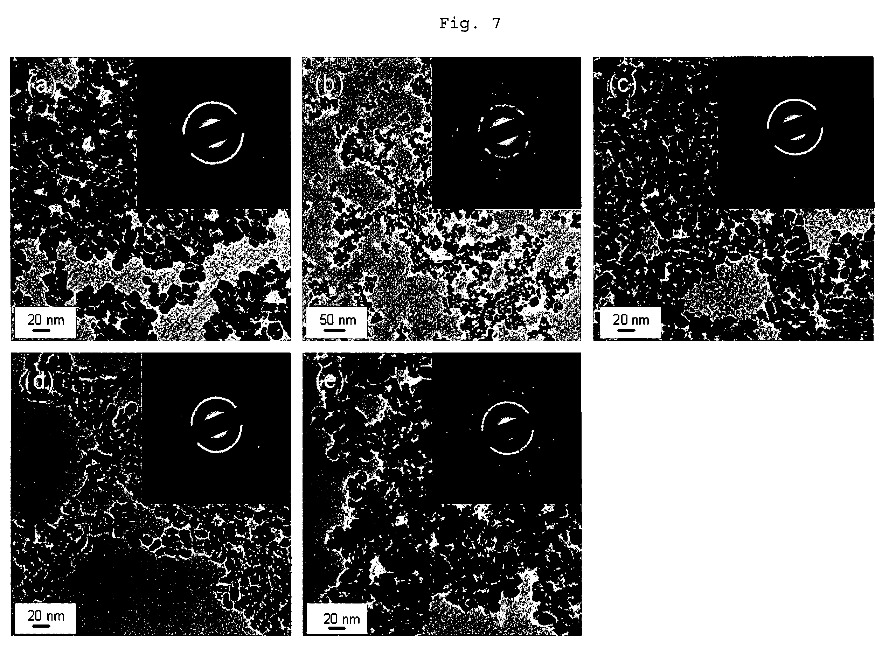

Es zeigte sich, dass mit [BMIM] [Br], [BMIM] [NTf₂], [BMIM] [SO₃Me], [BMIM] [SO₄Me] und [BMIM] [OTf] hochkristalline, einphasige Anatas-Partikel mit einer Kristallitgröße von 4 bis 11 nm erhalten werden konnten. Messungen der Oberfläche korreliert gut mit diesen Größen. Auch die TEM-Aufnahmen (Figur 7) zeigen die unterschiedlichen Teilchengrößen.

### Versuche mit Ti₄O₇(OEt)₂₀

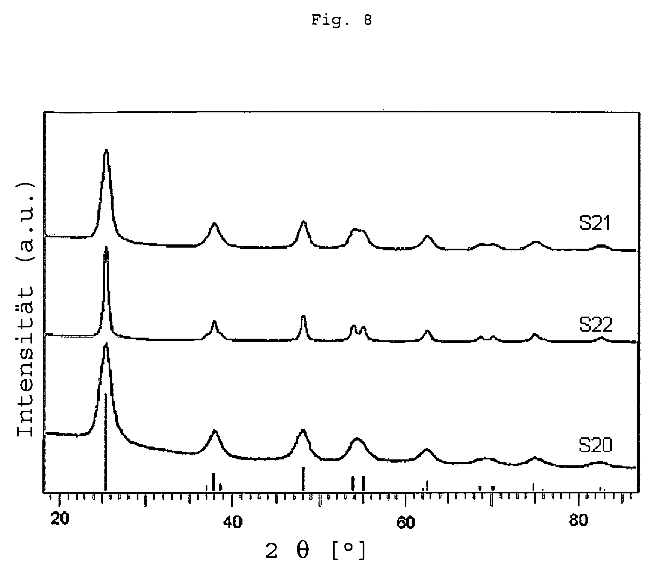

Es wurde untersucht, ob sich mit Hilfe des durch Rückfluss erhaltenen Precursors auch Nanopartikel herstellen lassen. Dazu wurde der hergestellte Precursor (Ti₄O₇(OEt)₂₀, 1.27 g) in Ethanol (26 g <0.1 % (S21)oder 2 % Wasser(S22)) gelöst und ohne ionische Flüssigkeit 12 Stunden bei 210 °C im Autoklaven hydrothermal behandelt. Gleiches wurde mit Ti(ⁱPr)₄ durchgeführt (S20). In Tabelle 5 sind die gemessene Kristallitgrößen und gemessenen Partikeloberflächen angegeben. XRD-Messungen (Figur 8) zeigen, dass bei dem Kontrollversuch S20 nur Partikel mit geringem Kristallisationsgrad erhalten werden. Im Gegensatz dazu wurde bei Verwendung des Precursors hochkristalline einphasige Kristallite erhalten. Abhängig vom Wassergehalt wurden unterschiedliche Größen erhalten. Die erhaltenen Pulver ähneln den Proben S3 und S6, welche mit [BMIM][Cl] als ionische Flüssigkeit hergestellt wurden. Dies zeigt, dass der durch kontrollierte Hydrolyse in Gegenwart einer ionischen Flüssigkeit hergestellte Precursor es ermöglich auch ohne ionische Flüssigkeit hochkristalline Partikel zu erhalten.

### Wiederverwendung der ionischen Flüssigkeit

Das vorliegende Verfahren ermöglicht zusätzlich eine einfache Wiederverwendung der ionischen Flüssigkeit. Die Partikel und die eingesetzten Verbindungen mit mindestens einer Hydroxylgruppe lassen sich durch Zentrifugation und Destillation einfach abtrennen. So konnten [BMIM][Cl] und [BMIM] [NTf₂] bis zu 5 mal isoliert und mit Ethanol (2 % Wasser) erneut eingesetzt werden. Es wurden jedes Mal hochkristalline Anatas-Partikel mit einer Kristallitgröße zwischen 10 und 11 nm in quantitativer Ausbeute erhalten.

Es sind zahlreiche Abwandlungen und Weiterbildungen der beschriebenen Ausführungsbeispiele verwirklichbar.

### Herstellung der Partikel

2.84 g (Ti(OⁱPr)₄ (Titantetraisopropylat; 10 mmol) wurden zu einer Lösung aus der ionischen Flüssigkeit (20 mmol) und Ethanol (26 g) bei Raumtemperatur getropft (Der Wassergehalt des Ethanols wurde zwischen 0.1 % und 5 % variiert). Die Lösung wurde gerührt und danach für 4 Stunden refluxiert. Dabei bildete sich Ti₄O₇(OEt)₂₀. Die Reaktionsmischung wurde in einen Teflonkolben überführt und in einem Autoklaven hydrothermal behandelt. Ohne das vorherige Refluxieren, wurde die Reaktionsmischung direkt nach der Zugabe in dem Autoklaven hydrothermal behandelt. Die Reaktionsmischung wurde mit einer Heizrate von 4.4 K/Min. auf 220 °C erhitzt. Die gesamte hydrothermale Behandlung wurde für 2.75 oder 12 Stunden durchgeführt. Die Probe wurde im Autoklaven auf Raumtemperatur gekühlt. Die gebildeten Feststoffe wurden durch Zentrifugieren abgetrennt. Die Produkte wurden fünfmal mit Ethanol gewaschen und mit Wasser als Lösungsmittel gefriergetrocknet.

Die verwendeten ionischen Flüssigkeiten können nach Isolierung der Partikel und Abdestillation der flüchtigen Bestandteile (Ethanol) wiederverwendet werden.

Für andere Alkohole (wie z.B. in Tabelle 2 angegeben) wurde analog vorgegangen. Die Reaktionsbedingungen der Proben sind in Tabelle 4 zusammengefasst.

### Herstellung von Ti₄O₇(OEt)₂₀

2.84 g Ti(OⁱPr)₄ (10 mmol) wurden zu einer Lösung von [BMIM] [Cl] (20 mmol, 3.49 g) in Ethanol (11.4 g; < 0.1 % Wasser) unter Rühren in einem offenen Kolben zugetropft. Nach einer Stunde Rühren bei Raumtemperatur wurde eine trübe Lösung erhalten. Die Temperatur wurde auf die Rückflusstemperatur erhöht, wobei sich eine klare Lösung bildete. Die Probe wurde noch 4 Stunden weitergerührt und die leichtflüchtigen Bestandteile wurden abdestilliert.

Die zurückgebliebene Lösung wurde in CH₃CN und EtOAc (1:1)unter Rückfluss gelöst und über ein Filterpapier gefiltert. Diese Lösung (Mutterlauge) wurde über Nacht bei Raumtemperatur gelagert. Dabei bildeten sich farblose Kristalle. Die Mischung wurde für einen weiteren Tag bei -30 °C gelagert. Die flüssige Phase wurde dekantiert und die erhalten Feststoffe dreimal mit CH₃CN gewaschen und in einem Stickstoffstrom getrocknet. Man erhielt 1.27 g Ti₄O₇(OEt)₂₀ (70 %).

Das erhaltene Ti₄O₇(OEt)₂₀ wurde in Ethanol gelöst (26 g mit 0.1 % oder 2 % Wasser) und für 12 Stunden bei 210 °C hydrothermal behandelt. Man erhielt kristalline TiO₂-Partikel als Anatas (S21, S22)

### Herstellung von ZrO₂-Partikeln

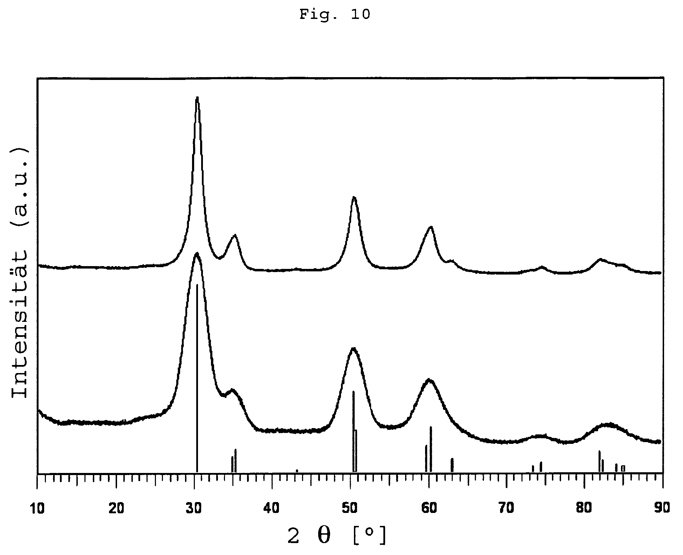

4.68 g (Zr(OⁱPr)₄ (Zirkoniumtetraisopropylat; 10 mmol, 70 % in Propanol) wurden zu einer Lösung aus [BMIM][Cl] (20 mmol) und Ethanol (26 g) bei Raumtemperatur getropft (Wassergehalt des Ethanols wurde zwischen 0.1 % und 5 % variiert). Die Reaktionsmischung wurde in einem Autoklaven hydrothermal behandelt. Die Reaktionsmischung wurde mit einer Heizrate von 4.4 K/Min. auf 210 °C erhitzt. Die gesamte hydrothermale Behandlung wurde für 12 Stunden durchgeführt. Die Probe wurde im Autoklaven langsam auf Raumtemperatur gekühlt. Die gebildeten Feststoffe wurden durch Zentrifugieren abgetrennt. Die Produkte wurden fünfmal mit Ethanol gewaschen und bei Raumtemperatur getrocknet. Man erhielt tetragonale ZrO₂-Nanopartikel. Aus dem in Fig. 10 gezeigten XRD-Messungen kann eine Kristallitgröße von 2 nm ausgerechnet werden (Scherrer-Konstante k=1). Die weißen Feststoffteilchen wurden noch für 4 Stunden bei 500 °C gesindert. Man erhielt tetragonale ZrO₂ Nanopartikel mit einer Größe von ca. 5 nm.

### zitierte Literatur

DE 10 2004 009 287 A1

**Tabelle 1:**

| Probe | Alkohol | Wassergehalt | Ionische Flüssigkeit | Partikelgröße [nm] | S_{BET} [m²g⁻¹] |
|---|---|---|---|---|---|
| S1 | EtOH (26 g) | <0.1 % | [BMIM][Cl] 2 eq. | - | - |
| S2 | EtOH (26 g) | <0.1 % | [BMIM][Cl] 2 eq. | 9 | 143 |
| S3 | EtOH (26 g) | <0.1 % | [BMIM][Cl] 2 eq. | 6 | 163 |
| S4 | EtOH (26 g) | <0.1 % | [BMIM][Cl] 0.5 eq. | - | - |
| S5 | EtOH (26 g) | <0.1 % | [BMIM][Cl] 1 eq. | - | - |
| S6 | EtOH (26 g) | 2 % | [BMIM][Cl] 2 eq. | 10 | 123 |
| S7 | EtOH (26 g) | 5 % | [BMIM][Cl] 2 eq. | 11 | 120 |

**Tabelle 2**

| Probe | Alkohol | Wassergehalt | Ionische Flüssigkeit | Partikelgröße [nm] | S_{BET} [m²g⁻¹] |
|---|---|---|---|---|---|
| S8 | n-PrOH (26 g) | <0.1 % | [BMIM][Cl] 2 eq. | 8 | - |
| S9 | i-PrOH (26 g) | <0.1 % | [BMIM][Cl] 2 eq. | - | - |
| S10 | n-PrOH (26 g) | 2 % | [BMIM][Cl] 2 eq. | 9 | 143 |
| S11 | i-PrOH (26 g) | 2 % | [BMIM][Cl] 2 eq. | 13 | 102 |
| S12 | BuOH (26 g) | 2 % | [BMIM] [Cl] 2 eq. | 8 | 146 |

**Tabelle 3**

| Probe | Alkohol | Wassergehalt | Ionische Flüssigkeit | Partikelgröße [nm] | S_{BET} [m²g⁻¹] |
|---|---|---|---|---|---|
| S13 | EtOH (26 g) | 2 % | [BMIM] [Br] 2 eq. | 11 | 123 |
| S14 | EtOH (26 g) | 2 % | [BMIM] [NTf₂] 2 eq. | 10 | 119 |
| S15 | EtOH (26 g) | 2 % | [BMIM] [SO₃Me] 2 eq. | 8 | 148 |
| S16 | EtOH (26 g) | 2 % | [BMIM] [SO₄Me] 2 eq. | 4 | 179 |
| S17 | EtOH (26 g) | 2 % | [BMIM] [OTf] 2 eq. | 10 | 128 |

**Tabelle 4**

| Probe | Vorbehandlung | Hydrothermale Behandlung |
|---|---|---|
| S1 | 4h reflux | 2.75 h / 210 °C |
| S2 | 4h reflux | 12 h / 210 °C |
| S3 | - | 12 h / 210 °C |
| S4 | - | 12 h / 210 °C |
| S5 | - | 12 h / 210 °C |
| S6 | - | 12 h / 210 °C |
| S7 | - | 12 h / 210 °C |
| S8 | - | 12 h / 210 °C |
| S9 | - | 12 h / 210 °C |
| S10 | - | 12 h / 210 °C |
| S11 | - | 12 h / 210 °C |
| S12 | - | 12 h / 210 °C |
| S13 | - | 12 h / 210 °C |
| S14 | - | 12 h / 210 °C |
| S15 | - | 12 h / 210 °C |
| S16 | - | 12 h / 210 °C |
| S17 | - | 12 h / 210 °C |
| S20 | - | 12 h / 210 °C |
| S21 | - | 12 h / 210 °C |
| S22 | - | 12 h / 210 °C |

**Tabelle 5**

| Probe | Edukt | Wassergehalt | Teilchengröße [nm] | BET [m²/g] |
|---|---|---|---|---|
| S20 | Ti(OⁱPr)₄ | < 0.1 % | 4 | - |
| S21 | Ti₇O₄(OEt)₂₀ | < 0.1 % | 6 | 144 |
| S22 | Ti₇O₄ (OEt) 20 | 2 % | 11 | 153 |

## Patentansprüche

1. Verfahren zur Herstellung nanoskaliger Partikel beinhaltend folgende Schritte:
a) Herstellung einer Zusammensetzung aus einer hydrolysierbaren Metallverbindung, mindestens einer ionischen Flüssigkeit und mindestens eine Verbindung mit mindestens einer Hydroxylgruppe, wobei der Wassergehalt der Verbindung mit mindestens einer Hydroxylgruppe unter 10 Gew.-% liegt (gemessen mit Karl-Fischer-Methode);
b) Hydrothermale Behandlung der Zusammensetzung
c) Isolierung der nanoskaligen Partikel.

2. Verfahren nach Anspruch 1, **dadurch gekennzeichnet, dass** die ionische Flüssigkeit wiederverwendet werden kann.

3. Verfahren nach einem der vorhergehenden Ansprüche, **dadurch gekennzeichnet, dass**
das Verhältnis der hydrolysierbaren Metallverbindung und der ionischen Flüssigkeit zwischen 10:1 und 1:10 liegt (gemessen in mmol).

4. Verfahren nach Anspruch 3, **dadurch gekennzeichnet, dass** das Verhältnis der hydrolysierbaren Metallverbindung und der ionischen Flüssigkeit zwischen 1.5:1 und 5:1 (gemessen in mmol) liegt.

5. Verfahren nach einem der vorhergehenden Ansprüche, **dadurch gekennzeichnet, dass**
die hydrolysierbare Verbindung eine Verbindung der Formel
MXₙ
ist, wobei M ausgewählt ist aus der Gruppe enthaltend Mg, B, Al, Ga, In, Si, Ge, Sn, Pb, Y, Ti, Zr, V, Nb, Ta, Mo, W, Fe, Cu, Ag, Zn, Cd, Ce und La und n der Wertigkeit des Metalls entspricht und X eine hydrolysierbare Gruppe darstellt.

6. Verfahren nach einem der vorhergehenden Ansprüche, **dadurch gekennzeichnet, dass**
die ionische Flüssigkeit eine Flüssigkeit der Formel K⁺A⁻ist, wobei K⁺ ausgewählt ist aus der Gruppe der Ammonium-, Phosphonium-, Uronium-, Thiouronium-, Guanidiniumkationen oder heterocyclischen Kationen und A⁻ ausgewählt ist aus der Gruppe der Halogenide, Acetate, Phosphate, Phosphinate, Aluminate, Borate, Sulfate, Sulfonate, Imide, Amide oder Cyanate.

7. Verfahren nach einem der vorhergehenden Ansprüche, **dadurch gekennzeichnet, dass**
die mindestens eine Verbindung mit mindestens einer Hydroxylgruppe einen Siedepunkt von unter 200 °C aufweist.

8. Verfahren nach einem der vorhergehenden Ansprüche, **dadurch gekennzeichnet, dass**
die mindestens eine Verbindung mit mindestens einer Hydroxylgruppe ein niedererer aliphatischer Alkohol ist.

9. Verfahren zur Herstellung einer Precursorverbindung zur hydrothermalen Herstellung von nanoskaligen Partikeln beinhaltend die Schritte:
a) Herstellung einer Zusammensetzung aus einer hydrolysierbaren Metallverbindung, mindestens einer ionischen Flüssigkeit und mindestens eine Verbindung mit mindestens einer Hydroxylgruppe, wobei der Wassergehalt der Verbindung mit mindestens einer Hydroxylgruppe unter 10 Gew.-% liegt (gemessen mit Karl-Fischer-Methode);
b) Behandlung der Zusammensetzung unter Rückfluss;
c) Isolierung der Precursorverbindung.

10. Verfahren zur Herstellung von nanoskaligen Partikeln, **dadurch gekennzeichnet, dass**
eine Zusammensetzung enthaltend eine Precursorverbindung hergestellt nach Anspruch 9 und mindestens eine Verbindung mit mindestens einer Hydroxylgruppe hydrothermal behandelt wird.

## Claims

1. Method for producing nanoscale particles, comprising the following steps:
a) preparing a composition comprising a hydrolyzable metal compound, at least one ionic liquid, and at least one compound having at least one hydroxyl group, wherein the water content of the compound having at least one hydroxyl group is below 10% by weight (measured with Karl-Fischer method);
b) hydrothermally treating the composition
c) isolating the nanoscale particles.

2. Method according to Claim 1, **characterized in that** the ionic liquid can be re-used.

3. Method according to either of the preceding claims, **characterized in that** the ratio of the hydrolyzable metal compound to the ionic liquid is between 10:1 and 1:10 (measured in mmol).

4. Method according to Claim 3, **characterized in that** the ratio of the hydrolyzable metal compound to the ionic liquid is between 1.5:1 and 5:1 (measured in mmol).

5. Method according to any of the preceding claims, **characterized in that** the hydrolyzable compound is a compound of the formula
MXₙ
where M is selected from the group containing Mg, B, Al, Ga, In, Si, Ge, Sn, Pb, Y, Ti, Zr, V, Nb, Ta, Mo, W, Fe, Cu, Ag, Zn, Cd, Ce, and La, and n corresponds to the valence of the metal, and X represents a hydrolyzable group.

6. Method according to any of the preceding claims, **characterized in that** the ionic liquid is a liquid with the formula K⁺A⁻ where K⁺ is selected from the group of ammonium, phosphonium, uronium, thiouronium, guanidinium cations or heterocyclic cations and A⁻ is selected from a group of halides, acetates, phosphates, phosphinates, aluminates, borates, sulfates, sulfonates, imides, amides or cyanates.

7. Method according to any of the preceding claims, **characterized in that** the at least one compound having at least one hydroxyl group has a boiling point of below 200°C.

8. Method according to any of the preceding claims, **characterized in that** the at least one compound having at least one hydroxyl group is a lower aliphatic alcohol.

9. Method for preparing a precursor compound for the hydrothermal production of nanoscale particles, comprising the steps of:
a) preparing a composition comprising a hydrolyzable metal compound, at least one ionic liquid, and at least one compound having at least one hydroxyl group, wherein the water content of the compound having at least one hydroxyl group is below 10% by weight (measured with Karl-Fischer method);
b) treating the composition under reflux;
c) isolating the precursor compound.

10. Method for producing nanoscale particles, **characterized in that** a composition comprising a precursor compound prepared according to Claim 9 and at least one compound having at least one hydroxyl group is treated hydrothermally.

## Revendications

1. Procédé de fabrication de particules nanométriques comprenant les étapes suivantes :
a) la fabrication d'une composition à partir d'un composé métallique hydrolysable, d'au moins un liquide ionique et d'au moins un composé contenant au moins un groupe hydroxyle, la teneur en eau du composé contenant au moins un groupe hydroxyle étant inférieure à 10 % en poids (mesurée par la méthode de Karl-Fischer) ;
b) le traitement hydrothermal de la composition,
c) l'isolement des particules nanométriques.

2. Procédé selon la revendication 1, **caractérisé en ce que** le liquide ionique peut être réutilisé.

3. Procédé selon l'une quelconque des revendications précédentes, **caractérisé en ce que** le rapport entre le composé métallique hydrolysable et le liquide ionique est compris entre 10:1 et 1:10 (mesuré en mmol).

4. Procédé selon la revendication 3, **caractérisé en ce que** le rapport entre le composé métallique hydrolysable et le liquide ionique est compris entre 1,5:1 et 5:1 (mesuré en mmol).

5. Procédé selon l'une quelconque des revendications précédentes, **caractérisé en ce que** le composé hydrolysable est un composé de formule
MXₙ
dans laquelle M est choisi dans le groupe contenant Mg, B, Al, Ga, In, Si, Ge, Sn, Pb, Y, Ti, Zr, V, Nb, Ta, Mo, W, Fe, Cu, Ag, Zn, Cd, Ce et La, et n correspond à la valence du métal, et X représente un groupe hydrolysable.

6. Procédé selon l'une quelconque des revendications précédentes, **caractérisé en ce que** le liquide ionique est un liquide de formule K⁺A⁻, K⁺ étant choisi dans le groupe constitué par les cations ammonium, phosphonium, uronium, thiouronium, guanidinium ou les cations hétérocycliques, et A⁻ étant choisi dans le groupe constitué par les halogénures, les acétates, les phosphates, les phosphinates, les aluminates, les borates, les sulfates, les sulfonates, les imides, les amides ou les cyanates.

7. Procédé selon l'une quelconque des revendications précédentes, **caractérisé en ce que** ledit au moins un composé contenant au moins un groupe hydroxyle présente un point d'ébullition inférieur à 200 °C.

8. Procédé selon l'une quelconque des revendications précédentes, **caractérisé en ce que** ledit au moins un composé contenant au moins un groupe hydroxyle est un alcool aliphatique inférieur.

9. Procédé de fabrication d'un composé précurseur pour la fabrication hydrothermale de particules nanométriques, comprenant les étapes suivantes :
a) la fabrication d'une composition à partir d'un composé métallique hydrolysable, d'au moins un liquide ionique et d'au moins un composé contenant au moins un groupe hydroxyle, la teneur en eau du composé contenant au moins un groupe hydroxyle étant inférieure à 10 % en poids (mesurée par la méthode de Karl-Fischer) ;
b) le traitement de la composition à reflux ;
c) l'isolement du composé précurseur.

10. Procédé de fabrication de particules nanométriques, **caractérisé en ce qu'**une composition contenant un composé précurseur fabriqué selon la revendication 9 et au moins un composé contenant au moins un groupe hydroxyle est traitée hydrothermalement.
